# EUROPEAN PATENT SPECIFICATION

(11) **EP 0 682 761 B1**
(45) Date of publication and mention of the grant of the patent: **11.02.1998**
(21) Application number: 93924632.8
(22) Date of filing: 09.11.1993
(51) Int. Cl.: F22B 31/00, B01J 8/24, F23C 11/02

(54) **METHOD AND APPARATUS FOR RECOVERING HEAT IN A FLUIDIZED BED REACTOR**
METHODE UND VORRICHTUNG ZUR WÄRMEGEWINNUNG IN EINEM WIRBELBETTREAKTOR
PROCEDE ET DISPOSITIF DE RECUPERATION DE CHALEUR DANS UN REACTEUR A LIT FLUIDIFIE

(30) Priority: 10.11.1992 US 973396; 05.04.1993 US 41571; 26.05.1993 US 66277; 05.10.1993 US 131852
(43) Date of publication of application: 22.11.1995
(73) Proprietor: Foster Wheeler Energia Oy, 00440 Helsinki (FI)
(72) Inventor: HYPPÄNEN, Timo, FIN-48710 Karhula (FI)
(74) Representative: Görg, Klaus, Dipl.-Ing.
(86) International application number: PCT/FI93/00467
(87) International publication number: WO 94/11672

(56) References cited:
- US-A- 5 014 652
- US-A- 5 040 492
- US-A- 5 069 171
- US-A- 5 140 950

## Description

The present invention refers to a method and apparatus for recovering heat from solid particles in a fluidized bed reactor, comprising a processing chamber with a fluidized bed of solid particles therein, and utilizing a heat transfer chamber, which is connected to the processing chamber and has heat transfer surfaces disposed therein.

Heat is thereby recovered by continuously introducing hot solid particles from the processing chamber into the heat transfer chamber, introducing gas into the heat transfer chamber, for controlling the flow of solid particles within the heat transfer chamber, recovering heat with heat transfer surfaces disposed in the heat transfer chamber, and continuously recycling solid particles discharged from the heat transfer chamber into the processing chamber. The apparatus thereby comprises inlet means for introducing a continuous flow of hot solid particles from the processing chamber into the heat transfer chamber, outlet means for continuously recycling solid particles from the heat transfer chamber into the processing chamber, and nozzle means for introducing gas into the heat transfer chamber.

Fluidized bed reactors, such as circulating fluidized bed reactors, are used in a variety of different combustion, heat transfer, chemical or metallurgical processes. Typically heat is recovered from fluidized bed combustion processes by heat transfer surfaces provided within the combustion chamber and/or within a convection section arranged in the gas pass after the combustion chamber. It has also been suggested to arrange heat transfer surfaces in separate external heat exchangers connected to an external circulation of solid material from the combustion chamber.

In circulating fluidized bed (CFB) reactors, it has been suggested to connect the external heat exchanger or recycle heat exchanger to the return duct, thereby recovering heat from the hot solid material being recycled in the system. Heat transfer surfaces are disposed in a fluidized bed formed of circulating material in the external heat exchanger. In the external heat exchanger the heat transfer can to some extent be controlled by controlling the fluidizing gas flow around the heat transfer surfaces.

In an external heat exchanger, connected to a system continuously providing hot solid material, such as a return duct in a CFB reactor, the fluidizing gas also controls the transport of solid material through the heat exchanger. It is therefor not possible to control the heat transfer in the external heat exchanger independently from the solid flow through the heat exchanger. It is e.g. not possible to shut off heat transfer completely, e.g. during start up or low load conditions, even if no or very little heat transfer is taking place, as shutting off fluidizing gas flow would also shut off the flow of solid material.

In systems having external heat exchangers it has therefor been suggested to divide the solid material flow into two portions, one portion flowing into the heat exchanger and the other portion by-passing the heat exchanger. The heat transfer is controlled by controlling the portion of solid material flowing through the heat exchanger. The system requires additional mechanical valves for controlling the two solid flows. The construction is rather complicated, vulnerable and space consuming and adds to the cost of the system.

A method and an apparatus according to the preambles of claims 1 and 11 are known from US-A-5140950. This document discloses a circulating fluidized bed combustion system and method with a recycle heat exchange section including an inlet compartment and a heat exchange compartment. The flue gases and entrained solids from the fluidized bed in the furnace section are separated, the flue gases are passed to a heat recovery section, and the separated particulate material is passed directly to the inlet compartment via a dipleg. The recycled heat exchange section includes a bypass chamber for permitting the separated solids to pass directly from the inlet compartment to the furnace section. Heat exchange tubes are provided in the heat exchange compartment to transfer heat from the separated material. The separated material is then passed back to the furnace section. Air is introduced into the inlet compartment below the dipleg and in alignment therewith to control the flow of separated material from the separator and, therefore the recycle rate.

US-A-5014652 discloses a circulating fluidized bed reactor and a fluidized bed cooler in the reactor formed as an upwardly open vessel with a generally closed bottom and side walls arranged so as to collect a portion of the particulate material from the reactor chamber upper portion. The cooler comprises heat transfer means and an outlet for allowing particulate material to be returned into the reactor chamber.

It is an object of the present invention to provide a method and apparatus for recovering heat from fluidized bed reactors in which above mentioned drawbacks have been minimized.

It is especially an object of the present invention to provide an easy to control heat exchanger or heat transfer chamber to be connected to a solid circulation in a fluidized bed reactor, e.g. to a return duct of a CFB reactor.

It is further an object of the present invention to provide an improved method for controlling heat transfer in an external heat exchanger connected to a system delivering a continuous flow of hot solid material.

These objects are solved according to the present invention by a method comprising the features of claim 1 and an apparatus comprising the features of claim 11. Detailed embodiments are described in the dependent claims.

The heat transfer chamber is according to an preferred embodiment of the invention divided into several heat transfer zones, arranged side by side horizontally, and separated from each other by solid particle transport zones. Fluidizing gas or some other transporting gas able to control the flow of particles in the zones is introduced separately to the heat transfer zones and the solid particle transport zones, e.g. through wind boxes arranged below the heat transfer chamber or through nozzles arranged in the walls of the heat transfer chamber.

By separately controlling the fluidizing or transporting gas flows it is possible to control the internal flow of solid particles within the heat transfer chamber. It is e.g. possible to shut off or decrease flow of fluidizing gas in one heat transfer zone to such an extent that no or almost no solid material is flowing around the heat transfer surfaces, whereby heat transfer to the surfaces decreases to a minimum.

At the same time the total solid flow through the heat transfer chamber is kept at a desired level, e.g. a constant level, by the fluidization gas flows or transporting gas flows introduced into the solid particle transporting zones around the heat transfer zone being shut off.

The fluidization of the heat transfer zones controls to some extent the internal flow of solid particles within the heat transfer chamber, i.e. controls the extent of fresh material coming from adjacent zones in contact with the heat transfer surfaces.

By separately controlling the flow of fluidizing or transporting gas being introduced into the heat transfer zones and also the solid particle transport zones it is possible to control the path solid particles will take in the heat transfer chamber or the path of solid particles between one or more inlets and one or more outlets in the heat transfer chamber.

Solid material may be discharged from the heat transfer chamber through overflow openings arranged at desired locations at a desired level in the heat transfer chamber. The solid material may also be discharged through openings arranged below the surface level of the fluidized bed in the heat transfer chamber. The openings preferably then constitute solid flow seals for providing a way to control the discharge of solid material. Fluidizing or transporting gas flows are introduced to control the flow of solid material through the openings.

Discharge outlets providing a solid flow seal may include several horizontal vertically narrow slot like channels arranged above each other in a frame like construction. The height of the slot should be less than half of the length of the channel formed in order to prevent solid material to flow by gravity through the channel.

In the heat transfer chamber the heat transfer surfaces are preferably disposed in the bed of solid particles therein, but may extend upward beyond the bed. Heat may also be recovered by heat transfer surfaces arranged in the walls of the heat transfer chamber.

The heat transfer chamber may advantageously be arranged in the lower part of the return duct of a circulating fluidized bed reactor. The lower part of the return duct may have to be extended to provide enough space for heat transfer surfaces, the extension part thereby e.g. having a larger horizontal cross section than the upper part of the return duct. In CFB boilers evaporation or superheating of steam may advantageously take place in such a return duct as in CFB systems heat is readily available for evaporation and/or superheating in the circulating mass of hot particles. The gas atmosphere in the heat transfer zone in the return duct being very limited and containing mainly clean gas provides very advantageous conditions for superheating. The superheaters may therefor be heated to much higher temperatures than what normally is the case in combustion chambers, especially when flue gases contain corrosive components.

The heat transfer from particles to superheater surfaces is controlled by introducing a separately controlled fluidizing flow of suitable gas into at least a part of the heat transfer zone, providing movement of particles close to the superheater surfaces. Increased flow around the surfaces will increase the heat transfer to the surfaces. Gas, such as air or inert gas may be introduced as fluidizing gas for heat transfer control through several separate nozzles. Also gas introduced from the side walls may be used for controlling heat transfer. The heat transfer may be controlled by the location and/or flow rate of gas introduced into different parts of the heat transfer chamber.

It may in some cases be necessary to arrange a gas seal in the return duct for preventing gases from flowing upwards into the particle separator connected to the upper end of the return duct. The gas may then be discharged from the return duct through conduits into the processing chamber. The height of the solid particle bed in the heat transfer chamber may, however, in many cases provide a gas seal i.e. sufficiently decrease the upward gas flow in the return duct, so that no additional gas seal is needed. Very small amounts of gas passing the bed may be allowed to flow up via the return duct into the particle separator.

The present invention provides a very simple CFB boiler construction. The return duct is preferably constructed as a narrow vertical channel having one wall common with the combustion chamber, the wall being e.g. a typical membrane wall used in CFB boilers. The opposite wall may be a similar membrane wall. Outlets connecting the return duct with the processing chamber may be prefabricated into the wall.
According to another preferred embodiment of the present invention there is a heat transfer chamber arranged within the processing chamber, connected to the internal circulation thereof. In the processing chamber solid particles flowing downward along a wall or particles moving in the fluidized bed may be guided into the heat transfer chamber. The heat transfer chamber may be e.g. constructed as a wall chamber connected to one of the side walls in the processing chamber. The heat transfer chamber may be disposed at the side wall at a distance from the bottom of the processing chamber or it may stand close to or directly on the bottom, e.g. the grid. The wall chamber may protrude into the processing chamber or protrude outward of the processing chamber.

The wall chamber may be formed in similar manner as the vertical return duct described earlier, having a narrow inlet passage and an extended lower part including the heat transfer surfaces. Particles captured by the wall chamber are allowed to form a heat transfer bed within the lower part of the wall chamber similar to the bed in the return duct described earlier. The heat transfer in the bed is controlled as in the return duct.

At high load conditions heat may mainly be recovered in the return duct, whereas at low load conditions heat may mainly be recovered in a wall chamber connected to the internal circulation within the processing chamber.

According to a special embodiment of the present invention there may be arranged heat transfer surfaces evenly in heat transfer and solid particle transport zones. The solid particle transport zones are then according to the invention very small compared to the heat transfer zones, whereby also the combined heat transfer surface area of the solid particle transport zones is very small compared to the combined heat transfer surface area of the combined heat transfer zones. At most only about 10 % of the total heat transfer can be achieved from the combined heat transfer surfaces in the solid particle transport zones. About 10 % of the total heat transfer surface area may be disposed in solid particle transport zones. At normal conditions an about even flow of fluidizing gas may be introduced into all zones. The fluidizing gas maintains heat transfer to heat transfer surfaces over the entire heat transfer chamber. The fluidizing gas introduced additionally provides, at the small solid particle transport zones, having outlet openings arranged therein, a solid particle flow from the heat transfer chamber into an adjacent processing chamber. For decreasing heat transfer, at low load conditions or at start up, gas flow may be minimized in all zones, i.e. heat transfer zones, except solid particle transport zones, through which solid material is recycled into the processing chamber. As solid particle transport zones are very small compared to the rest of the heat transfer chamber, only very small amounts of heat will be transferred in the zones.

One of the main advantages provided by the present invention is the possibility to control heat transfer independently from solid flow through a heat transfer chamber, even if only one single combined heat transfer and recycling chamber is used. The present invention provides a method according to which the heat transfer may even be stopped without disturbing the solid flow through the same chamber.

The heat transfer may be controlled by changing the proportion of gas introduced through different nozzles in the heat transfer chamber, without changing the total solid particle flow through the chamber. The total gas flow may be kept constant. The heat transfer may be increased by increasing the gas flow through nozzles situated below or close to heat transfer surfaces and decreased by increasing gas flow through nozzles situated further away from the heat transfer surfaces.

The present invention further provides a possibility to build a compact heat transfer chamber and processing chamber construction, which is especially advantageous in pressurized applications.

### BRIEF DESCRIPTION OF THE DRAWINGS

The invention will be described further, by way of example, with reference to the accompanying drawings in which
- FIG. 1: is a schematical vertical section through a circulating fluidized bed reactor having a heat transfer chamber in its return duct;
- Fig. 2: is a partial cross sectional view of a lower part of the return duct in Fig. 1 taken along line AA;
- Fig. 3: is a schematical vertical section through a lower portion of a fluidized bed reactor having a heat transfer chamber within the processing chamber; and
- Fig. 4: is a partial cross sectional view of a heat transfer chamber in Fig. 3 taken along line BB.

### DETAILED DESCRIPTION OF THE PREFERRED EMBODIMENTS

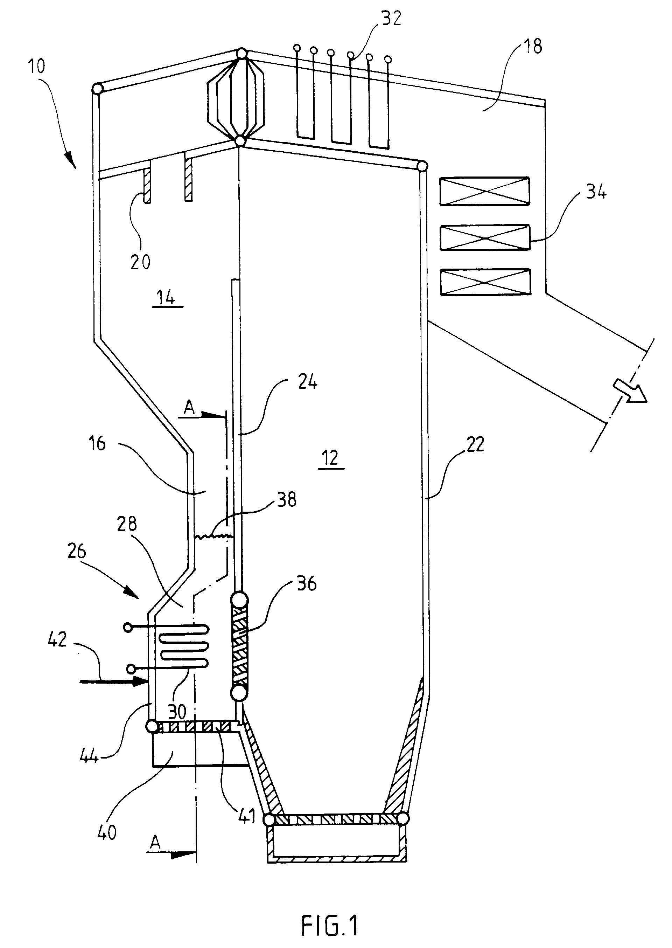

Fig. 1 shows a circulating fluidized bed CFB combustor 10, having a combustion chamber or processing chamber 12 with an expanded fluidized bed of particles therein. A particle separator 14 is connected to the upper part of the combustion chamber 12, for separating particles entrained with the mixture of flue gases and solid material being discharged from the combustion chamber. A vertical channel like return duct 16 is provided for recirculating separated solid material from the separator 14 into the lower part of the combustion chamber 12. A convection section 18 is connected to a gas outlet 20 arranged in the upper part of the separator 14.

The walls 22,24 in the combustion chamber may be membrane walls, one wall 24 being common for the combustion chamber 12 and the return duct 16.

The lower part 26 of the return duct 16 has a larger horizontal cross section than the upper part of the return duct. A bed 28 of at least partly fluidized solid particles is provided in that lower part 26. Heat transfer surfaces 30 are arranged in the bed 28 for recovering heat from the solid material being circulated in the CFB combustor system. The lower part 26 of the return duct 16 thereby constituting a heat transfer chamber 26. Heat is also recovered with heat transfer surfaces 32,34 in the convection section 18.

Outlet openings 36 forming a solid flow seal, preventing uncontrolled flow of solid particles by gravity, are arranged in the heat transfer chamber 26 in the common wall 24 for recycling solid particles from the bed 28 into the combustion chamber 12. The outlet openings 36 are arranged to open into the bed 28 below its upper surface 38 level. The height of the bed 28 between the outlet openings 36 and the bed surface 38 provides a gas seal preventing gas from flowing from the combustion chamber 12 into the return duct 16 through the outlet openings 36.

Fluidizing gas is introduced into the bed 28 from a windbox 40 through a grid 41 in the bottom of the return duct 16, for fluidizing the bed at least partly. Transporting gas may additionally be introduced through nozzles 42 arranged to introduce transporting or fluidizing gas, through a side wall 44 in the heat transfer chamber 26. Fluidizing gas and/or transporting gas is used to fluidize at least partly the solid material in heat transfer chamber 26. The fluidizing or transporting gas may also be used to maintain an internal flow of solid particles within the bed, e.g. for transporting solid particles horizontally within the bed. The fluidizing or transporting gas is also used for transporting solid particles towards and through the outlet openings 36.

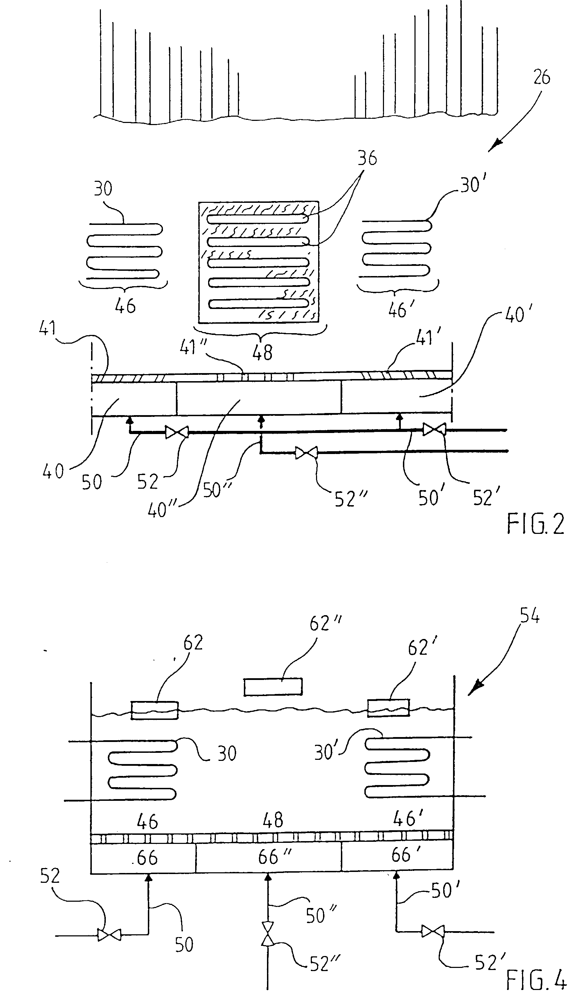

Fig. 2 shows that the heat transfer chamber 26 is divided in at least two heat transfer zones 46, 46' and a solid particle transporting zone 48, formed between the heat transfer zones. Heat transfer zones 46, 46' are formed by arranging heat transfer surfaces 30, 30' within the zones. Heat transfer zones 46,46' and the solid particle transporting zone 48 are fluidized by separately controlled gas flows 50, 50', 50" introduced through openings 40, 40', 40". The gas flows are controlled by valves 52, 52', 52". Solid particle outlet openings 36 are provided in the wall 24 in the solid particle transporting zone 48.

Heat transfer may be controlled in the heat transfer chamber 26, shown in Fig. 2, by controlling the flow of fluidizing gas introduced into the different zones, especially the heat transfer zones 46 and/or 46'. It is e.g. possible to decrease heat transfer by decreasing both or either of gas flows 50, 50', whereby fluidization of solid particles around the heat transfer surfaces 30 and/or 30' decreases, as well as, heat transfer in zones 46 and/or 46'.

Flow of solid material through the heat transfer chamber 26, from the heat transfer chamber into the combustion chamber 12, is not affected by the control of heat transfer as long as fluidizing gas is introduced into the solid particle transport zone 48.

Solid material may be introduced into the heat transfer chamber 26 evenly or unevenly over the whole width of the return duct 16, e.g. whole width of side wall 24. The entrance point of solid particles is not of very great importance as solid particles can flow freely in all directions in the chamber. The entrance point may be above a heat transfer zone 46, 46' or above a solid particle transport zone 48. Solid material introduced into the heat transfer chamber 26 may thereby flow from different locations towards the outlet openings 36 and into the combustion chamber 12 even if the heat transfer is decreased by decreasing fluidization in heat transfer zones 46, 46'. If desired, solid flow through outlet openings 36 in a specific transport zone 48 may be prevented by decreasing the gas flow through openings 41" into that specific zone.

The heat transfer chamber 26 according to the present invention allows free flow of solid material between different zones 46,46',48, as no partition walls are used to prevent such flow. Fluidizing or transporting gas flows may be used to guide or transport solid particles between different zones and within the zones. Solid particles may flow freely from one zone, having a higher bed surface level than the adjacent zone, to said lower adjacent zone almost without the help of fluidizing or transporting gas.

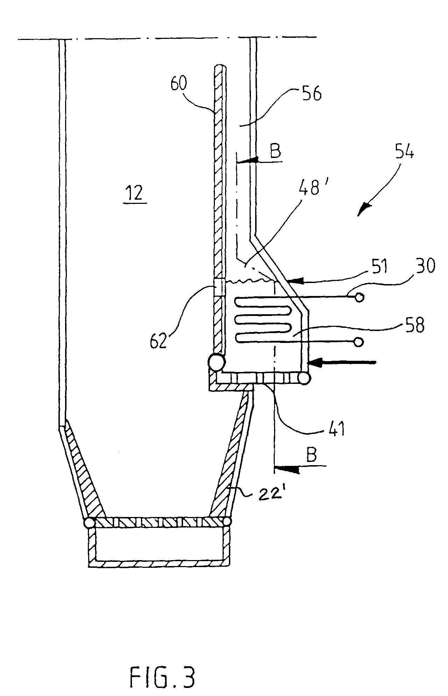

Fig. 3 shows a lower portion of a fluidized bed reactor having a wall chamber 54 for gathering solid particles from the internal circulation in the fluidized bed in the combustion chamber 12 and for recovering heat from the material gathered therein.

The wall chamber 54 has an inlet channel 56 in its upper part and a heat transfer chamber 58, with heat transfer surfaces 30 arranged therein, in its lower part. The wall chamber 54 may reach along a portion of a side wall 22' or along the whole side wall 22' in the combustion chamber 12.

A partition wall 60 divides the wall chamber from the combustion chamber.

An overflow opening 62 is arranged in the upper part of the heat transfer chamber for allowing solid particles to flow by overflow into the combustion chamber 12. Additional outlet openings, with solid flow seal, may be aranged below the bed surface 38 level if desired.

Fig. 4 shows a partial cross sectional view of the heat transfer chamber 54 taken along line BB. The heat transfer chamber is divided in two heat transfer zones 46, 46' and in one solid particle transport zone 48 therebetween. Heat transfer surfaces 30, 30' are disposed in the heat transfer zones 46, 46'.

Three overflow openings 62,62',62", one opening 62" arranged at a higher level than the other two, are shown one above each separate zone 46, 46', 48. Separately controlled fluidizing gas flows 50, 50', 50" are introduced through separate wind boxes 66, 66', 66".
Heat transfer in the heat transfer chamber may be decreased by decreasing gas flows 50 and 50', whereby fluidization of solid particles around heat transfer surfaces will decrease, as well as, heat transfer. Solid particles introduced into the heat transfer chamber may, however, continue to flow through overflow openings 62,62'. If bed level in the heat transfer chamber increases then solid particles may be discharged by overflow through opening 62".

At some special situations it may be necessary to stop fluidization completely in the bottom part of the heat transfer chamber, then solid particles may still be recycled into the combustion chamber by overflow, with the help of fluidizing or transport gas introduced through nozzles 51 (see Fig. 3) arranged above the solid particle transport and heat transfer zones. Thus a solid particle transport zone is arranged vertically above a heat transfer zone 46, 46'.

While the invention has been described in connection with what is presently considered to be most practical and preferred embodiments of the invention, it is to be understood that the invention is not to be limited to the disclosed embodiments, but on the contrary, is intended to cover various modifications and equivalent arrangements included within the scope of the appended claims.

## Claims

1. Method of recovering heat from solid particles in a fluidized bed reactor, comprising a processing chamber with a fluidized bed of solid particles therein and utilizing a heat transfer chamber, which is connected to the processing chamber having a fluidized bed of solid particles with heat transfer surfaces disposed therein, the method comprising the steps of:
- continuously introducing hot solid particles from the processing chamber into the fluidized bed of solid particles in the heat transfer chamber,
- introducing gas into the heat transfer chamber, for controlling the flow of solid particles within the heat transfer chamber,
- recovering heat with the heat transfer surfaces disposed in the heat transfer chamber,
- arranging in said fluidized bed of solid particles in the heat transfer chamber at least one heat transfer zone and at least one solid particle transport zone at substantially the same horizontal level,
- controlling the heat transfer in the heat transfer zone by introducing separately controlled flow of gas into the heat transfer zone and controlling the recycling of solid particles by introducing separately controlled flow of gas into the solid particle transport zone, and
- continuously recycling solid particles out of said particle transport zone in the heat transfer chamber, via outlet means into said processing chamber,
**characterized by** the additional steps of:
- continuously introducing the flow of hot solid particles from the processing chamber into the heat transfer chamber onto an upper surface of the fluidized bed of solid particles in the heat transfer chamber, and
- allowing free flow of solid particles between the at least one heat transfer zone and the at least one transport zone, the heat transfer and transport zones not being separated from each other by any partition walls.

2. A method as recited in claim 1, **characterized by** introducing separately controlled fluidizing gas into heat transfer and solid particle transport zones for controlling the internal flow of solid particles between said zones.

3. A method as recited in claim 1, **characterized by** introducing, in a heat transfer chamber, arranged in a return duct of a circulating fluidized bed rector, separately controlled flows of gas into heat transfer zones and solid particle transport zones, for controlling the path of solid particles between one or more inlets and one or more outlets in said heat transfer chamber.

4. A method as recited in claim 1, **characterized by** introducing, in a heat transfer chamber, arranged within a processing chamber, separately controlled flows of gas into heat transfer zones and solid particle transport zones, for controlling the path of solid particles between one or more inlets and one or more outlets in said heat transfer chamber.

5. A method as recited in claim 1, **characterized by** introducing separately controlled fluidizing gas into heat transfer and solid particle transport zones for controlling the internal horizontal flow of solid particles through heat transfer and solid particle transport zones, said heat transfer zones being separated from each other by solid particle transport zones and arranged at substantially the same horizontal level as the solid particle transport zones.

6. A method as recited in claim 1, **characterized by** introducing fluidizing gas into heat transfer zones in a heat transfer chamber and controlling the heat transfer by controlling the flow of fluidizing gas.

7. A method as recited in claim 1, **characterized by** introducing transporting gas flows into solid transport zones in a heat transfer chamber and controlling the heat transfer by controlling said transporting gas flows.

8. A method as recited in claim 1, **characterized by** discharging solids from the heat transfer chamber by overflow.

9. A method as recited in claim 1, **characterized by** discharging solids from the heat transfer chamber by openings arranged below the fluidized bed surface level, said openings preferably forming a solid flow seal.

10. A method as recited in claim 1, **characterized by** introducing hot solid particles from the processing chamber substantially over the whole horizontal cross section of the heat transfer chamber.

11. Apparatus for recovering heat from solid particles in a fluidized bed reactor, having a processing chamber (12) with a fluidized bed of solid particles therein, said apparatus comprising
- a heat transfer chamber (26, 58), connected to the processing chamber (12) and having a fluidized bed (28) of solid particles therein,
- heat transfer surfaces (30, 30') disposed in the heat transfer chamber (26, 58),
- inlet means (16, 56) for introducing a continuous flow of hot solid particles from the processing chamber (12) into the heat transfer chamber (26, 58),
- outlet means (36, 62, 62', 62") for continuously recycling solid particles from the heat transfer chamber (26, 58) into the processing chamber (12),
- nozzle means (40, 40', 40", 41, 41', 41", 42, 50, 50', 50", 51, 66, 66', 66") for introducing gas into the heat transfer chamber (26, 58),
- at least one heat transfer zone (46, 46') and at least one solid particle transport zone (48) at substantially same horizontal level within said fluidized bed (28) of solid particles in the heat transfer chamber (26, 58), and
- means for controlling the heat transfer in the heat transfer chamber, said means including separately controlled means (52, 52', 52") for introducing flows of gas into the heat transfer zone (46, 46') and the solid particle transport zone (48) of said fluidized bed of solid particles,
**characterized in that**
- the inlet means (16, 56) for introducing a continuous flow of hot solid particles is arranged above the heat transfer chamber (26, 58) such that the hot solid particles flow onto an upper surface (38) of the fluidized bed (28) of solid particles therein, and
- the at least one heat transfer zone (46, 46') and the at least one transport zone (48) are arranged such as to allow a free flow of solid particles therebetween, the heat transfer and transport zones (46, 46', 48) not being separated from each other by any partition walls.

12. An apparatus as recited in claim 11, **characterized by** two or more heat transfer zones (46, 46') arranged at the same horizontal level in the heat transfer chamber (26, 58), said heat transfer zones (46, 46') being separated from each other by solid particle transport zones (48).

13. An apparatus as recited in claim 11, **characterized by** the outlet means (36, 62, 62', 62") comprising openings for discharging solid particles by overflow.

14. An apparatus as recited in claim 11, **characterized by** the outlet means (36, 62, 62', 62") comprising several narrow horizontal slot like openings arranged below the surface level (38) of the fluidized bed in the heat transfer chamber (26, 58), said openings forming a solid flow seal in the heat transfer chamber (26, 58).

15. An apparatus as recited in claim 11, wherein the heat transfer chamber (26, 58) in a circulating fluidized bed reactor is arranged in the bottom part (26) of a return duct (16).

16. An apparatus as recited in claim 15, wherein the return duct (16, 56) is formed between two substantially plane tube walls parallel with a wall of the processing chamber (12), the return duct (16, 56) having a substantially rectangular slot like outlet opening, said outlet opening in the return duct (16, 56) forming an inlet opening in the heat transfer chamber (26, 58).

17. An apparatus as recited in claim 11, wherein the heat transfer chamber (58) is arranged internally within the processing chamber (12).

18. An apparatus as recited in claim 11, wherein heat transfer surfaces (30, 30', 30") are arranged evenly in heat transfer (46, 46') and solid particle transport zones (48), the solid particle transport zones (48) being substantially smaller than the heat transfer zones (46, 46'), whereby the combined heat transfer surface area in the combined heat transfer zones (46, 46') is substantially larger than the combined heat transfer surface area in the combined solid particle transport zones (48).

19. An apparatus according to claim 18, wherein combined heat transfer surface area in the solid particle transport zones (48) is very small in comparison with the combined heat transfer surface area in the heat transfer zones (46, 46').

20. An apparatus according to claim 11, **characterized by** the heat transfer chamber (26, 58) including heat transfer surfaces (30, 30', 30") being disposed evenly in both heat transfer (46, 46') and solid particle transport zones (48), and the combined heat transfer zones (46, 46') being substantially smaller than the combined solid particle transport zones (48), such that combined heat transfer in solid particle transport zones (48) is < 10 % of combined heat transfer in heat transfer zones (46, 46').

## Patentansprüche

1. Verfahren zur Rückgewinnung von Wärme aus Feststoffpartikeln in einem Wirbelschichtreaktor, umfassend eine Aufbereitungskammer mit einer Wirbelschicht aus Feststoffpartikeln darin und unter Nutzung einer Wärmeübertragungskammer, die mit der Aufbereitungskammer verbunden ist und eine Wirbelschicht aus Feststoffpartikeln mit darin angeordneten Wärmeübertragungsflächen aufweist, welches Verfahren folgende Schritte umfaßt:
- kontinuierliche Einführung heißer Feststoffpartikel von der Aufbereitungskammer in die Wirbelschicht aus Feststoffpartikeln in der Wärmeübertragungskammer,
- Einführung von Gas in die Wärmeübertragungskammer zur Regelung der Feststoffpartikelströmung innerhalb der Wärmeübertragungskammer,
- Rückgewinnung von Wärme mit den Wärmeübertragungsflächen, die in der Wärmeübertragungskammer angeordnet sind,
- Anordnung zumindest einer Wärmeübertragungszone und zumindest einer Feststoffpartikel-Förderzone wesentlich auf dem gleichem horizontalen Niveau in der Wirbelschicht aus Feststoffpartikeln in der Wärmeübertragungskammer,
- Regelung des Wärmeübergangs in der Wärmeübertragungszone durch Einführung einer getrennt geregelten Gasströmung in die Wärmeübertragungszone und Regelung der Rückführung von Feststoffpartikeln durch Einführung einer getrennt geregelten Gasströmung in die Feststoffpartikel-Förderzone, und
- kontinuierliche Rückführung von Feststoffpartikeln aus der Partikelförderzone in der Wärmeübertragungskammer über Auslaßmittel in die Aufbereitungskammer,
**gekennzeichnet durch** folgende zusätzliche Schritte:
- kontinuierliche Einführung einer Strömung heißer Feststoffpartikel aus der Aufbereitungskammer in die Wärmeübertragungskammer auf eine Oberfläche der Wirbelschicht aus Feststoffpartikeln in der Wärmeübertragungskammer, und
- Erlauben eines freien Feststoffpartikelflusses zwischen der zumindest einen Wärmeübertragungszone und der zumindest einen Förderzone, wobei die Wärmeübertragungs- und Förderzonen nicht durch irgendwelche Trennwände voneinander getrennt sind.

2. Verfahren nach Anspruch 1, **gekennzeichnet durch** Einführung von getrennt geregeltem Fluidisierungsgas in die Wärmeübetragungs- und Feststoffpartikel-Förderzonen zur Regelung der internen Feststoffpartikelströmung zwischen den Zonen.

3. Verfahren nach Anspruch 1, **gekennzeichnet durch** Einführung getrennt geregelter Gasströme in die Wärmeübertragungszonen und Feststoffpartikel-Förderzonen in einer Wärmeübertragungskammer, die in einem Rückführkanal eines zirkulierenden Wirbelschichtreaktors angeordnet ist, zur Regelung des Weges von Feststoffpartikeln zwischen einem oder mehreren Einlässen und einem oder mehreren Auslässen in der Wärmeübertragungskammer.

4. Verfahren nach Anspruch 1, **gekennzeichnet durch** Einführung geregelter Gasströme in Wärmeübertragungszonen und Feststoffpartikel-Förderzonen in einer Wärmeübertragungskammer, die innerhalb einer Aufbereitungskammer angeordnet ist, zur Regelung des Weges von Feststoffpartikeln zwischen einem oder mehreren Einlässen und einem oder mehreren Auslässen in der Wärmeübertragungskammer.

5. Verfahren nach Anspruch 1, **gekennzeichnet durch** Einführung von getrennt geregeltem Fluidisierungsgas in Wärmeübertragungs- und Feststoffpartikel-Förderzonen zur Regelung der internen Horizontalströmung von Feststoffpartikeln durch Wärmeübertragungs- und Feststoffpartikel-Förderzonen, welche Wärmeübertragungszonen durch Feststoffpartikel-Förderzonen voneinander getrennt sind und auf wesentlich gleichem Horizontalniveau wie die Feststoffpartikel-Förderzonen angeordnet sind.

6. Verfahren nach Anspruch 1, **gekennzeichnet durch** Einführung von Fluidisierungsgas in Wärmeübertragungszonen in einer Wärmeübertragungskammer und Regelung des Wärmeübergangs durch Regelung der Fluidisierungsgasströmung.

7. Verfahren nach Anspruch 1, **gekennzeichnet durch** Einführung von Trägergasströmen in Feststoffpartikel-Förderzonen in einer Wärmeübertragungskammer und Regelung des Wärmeübergangs durch Regelung der Trägergasströme.

8. Verfahren nach Anspruch 1, **gekennzeichnet durch** Ableitung von Feststoff aus der Wärmeübertragungskammer via Überlauf.

9. Verfahren nach Anspruch 1, **gekennzeichnet durch** Ableitung von Feststoff aus der Wärmeübertragungskammer durch Öffnungen, die unter dem Oberflächenniveau der Wirbelschicht angeordnet sind, welche Öffnungen vorzugsweise eine Feststoff-Durchflußschleuse bilden.

10. Verfahren nach Anspruch 1, **gekennzeichnet durch** Einführung heißer Feststoffpartikel aus der Aufbereitungskammer wesentlich über den gesamten Horizontalquerschnitt der Wärmeübertragungskammer.

11. Vorrichtung zur Rückgewinnung von Wärme aus Feststoffpartikeln in einem Wirbelschichtreaktor, der eine Aufbereitungskammer (12) mit einer Wirbelschicht aus Feststoffpartikeln darin aufweist, welche Vorrichtung umfaßt
- eine Wärmeübertragungskammer (26, 58), die mit der Aufbereitungskammer (12) verbunden ist und eine Wirbelschicht (28) von Feststoffpartikeln darin aufweist,
- Wärmeübertragungsflächen (30, 30'), die in der Wärmeübertragungskammer (26, 58) angeordnet sind,
- Einlaßmittel (16, 56) zur Einführung einer kontinuierlichen Strömung heißer Feststoffpartikel aus der Aufbereitungskammer (12) in die Wärmeübertragungskammer (26, 58),
- Auslaßmittel (36, 62, 62', 62") zur kontinuierlichen Rückführung von Feststoffpartikeln aus der Wärmeübertragungskammer (26, 58) in die Aufbereitungskammer (12),
- Düsenmittel (40, 40', 40", 41, 41', 41 ", 42, 50, 50', 50", 51, 66, 66', 66") zur Einführung von Gas in die Wärmeübertragungskammer (26, 58),
- zumindest eine Wärmeübertragungszone (46, 46') und zumindest eine Feststoffpartikel-Förderzone (48) auf wesentlich gleichem Horizontalniveau innerhalb der Wirbelschicht (28) von Feststoffpartikeln in der Wärmeübertragungskammer (26, 58), und
- Mittel zur Regelung des Wärmeübergangs in der Wärmeübertragungskammer, welche Mittel getrennt geregelte Mittel (52, 52', 52") zur Einführung von Gasströmen in die Wärmeübertragungszone (46, 46') und Feststoffpartikel-Förderzone (48) der Wirbelschicht aus Feststoffpartikeln umfassen,
**dadurch gekennzeichnet, daß**
- die Einlaßmittel (16, 56) zur Einführung einer ununterbrochenen Strömung heißer Feststoffpartikel über der Wärmeübertragungskammer (26, 58) auf solche Weise angeordnet sind, daß die heißen Feststoffpartikel auf eine Oberfläche (38) der Wirbelschicht (28) aus Feststoffpartikeln fließen, und
- die zumindest eine Wärmeübertragungszone (46, 46') und die zumindest eine Förderzone (48) auf solche Weise angeordnet sind, daß sie einen freien Feststoffpartikelfluß dazwischen gestatten, welche Wärmeübertragungs- und Förderzonen (46, 46', 48) nicht durch irgendwelche Trennwände voneinander getrennt sind.

12. Vorrichtung nach Anspruch 11, **gekennzeichnet durch** zwei oder mehrere Wärmeübertragungszonen (46, 46'), die auf gleichem Horizontalniveau in der Wärmeübertragungskammer (26, 58) angeordnet sind, welche Wärmeübertragungszonen (46, 46') durch Feststoffpartikel-Förderzonen (48) voneinander getrennt sind.

13. Vorrichtung nach Anspruch 11, **dadurch gekennzeichnet,** daß die Auslaßmittel (36, 62, 62', 62") Öffnungen zur Ableitung von Feststoffpartikeln durch Überlauf umfassen.

14. Vorrichtung nach Anspruch 11, **dadurch gekennzeichnet**, daß die Auslaßmittel (36, 62, 62', 62") mehrere schmale horizontale schlitzartige Öffnungen umfassen, die unter dem Oberflächenniveau (38) der Wirbelschicht in der Wärmeübertragungskammer (26, 58) angeordnet sind, welche Öffnungen eine Feststoff-Durchflußschleuse in der Wärmeübertragungskammer (26, 58) bilden.

15. Vorrichtung nach Anspruch 11, **dadurch gekennzeichnet,** daß die Wärmeübertragungskammer (26, 58) in einem zirkulierenden Wirbelschichtreaktor im unteren Teil (26) eines Rückführkanals (16) angeordnet ist.

16. Vorrichtung nach Anspruch 15, **dadurch gekennzeichnet,** daß der Rückführkanal (16, 56) zwischen zwei wesentlich flachen Rohrwänden parallel zu einer Wand der Aufbereitungskammer (12) ausgebildet ist, welcher Rückführkanal (16, 56) eine wesentlich rechteckige schlitzartige Auslaßöffnung hat, welche Auslaßöffnung des Rückführkanals (16, 56) eine Einlaßöffnung der Wärmeübertragungskammer (26, 58) bildet.

17. Vorrichtung nach Anspruch 11, **dadurch gekennzeichnet,** daß die Wärmeübertragungskammer (58) im Inneren der Aufbereitungskammer (12) angeordnet ist.

18. Vorrichtung nach Anspruch 11, **dadurch gekennzeichnet,** daß Wärmeübertragungsflächen (30, 30', 30" ) gleichmäßig in Wärmeübertragungs- (46, 46') und Feststollfpartikel-Förderzonen (48) angeordnet sind, welche Feststoffpartikel-Förderzonen (48) wesentlich kleiner als die Wärmeübertragungszonen (46, 46') sind, wobei die gesamte Wärmeübertragungsfläche der Wärmeübertragungszonen (46, 46') insgesamt wesentlich größer ist als die gesamte Wärmeübertragungsfläche der Feststoffpartikel-Förderzonen (48) insgesamt ist.

19. Vorrichtung nach Anspruch 18, **dadurch gekennzeichnet**, daß die gesamte Wärmeübertragungsfläche in den Feststoffpartikel-Förderzonen (48) sehr klein im Vergleich zur gesamten Wärmeübertragungsfläche in den Wärmeübertragungszonen (46, 46') ist.

20. Vorrichtung nach Anspruch 11, **dadurch gekennzeichnet,** daß die Wärmeübertragungskammer (26, 58) Wärmeübertragungsflächen (30, 30', 30" ) umfaßt, die gleichmäßig sowohl in Wärmeübertragungs- (46, 46') als auch Feststoffpartikel-Förderzonen (48) angeordnet sind, und die Wärmeübertragungszonen (46, 46') insgesamt wesentlich kleiner sind als die Feststoffpartikel-Förderzonen (48) insgesamt, so daß der gesamte Wärmeübergang in Feststoffpartikel-Förderzonen (48) unter 10 % des gesamten Wärmeübergangs in den Wärmeübertragungszonen (46, 46') ist.

## Revendications

1. Procédé de récupération de la chaleur à partir des particules solides dans un réacteur à lit fluidisé, comprenant une chambre de traitement avec un lit fluidisé de particules solides dans celle-ci et utilisant une chambre de transfert de chaleur, qui est raccordée à la chambre de traitement présentant un lit fluidisé en particules solides avec des surfaces de transfert de chaleur y disposées, procédé comprenant les étapes consistant à:
- introduire, de manière continue, des particules solides chaudes issues de la chambre de traitement dans le lit fluidisé de particules solides dans la chambre de transfert de chaleur,
- introduire du gaz dans la chambre de transfert de chaleur, afin de commander l'écoulement de particules solides à l'intérieur de la chambre de transfert de chaleur,
- récupérer de la chaleur avec les surfaces de transfert de chaleur disposées dans la chambre de transfert de chaleur,
- disposer dans ledit lit fluidisé de particules solides dans la chambre de transfert de chaleur au moins une zone de transfert de chaleur et au moins une zone de transport de particules solides sensiblement au même niveau horizontal,
- commander le transfert de chaleur dans la zone de transfert de chaleur en introduisant un courant de gaz séparément commandé dans la zone de transfert de chaleur et à commander le recyclage des particules solides en introduisant un courant de gaz séparément commandé dans la zone de transport de particules, et à
- recycler, en continu, des particules solides hors de ladite zone de transport de particules dans la chambre de transfert de chaleur, par l'intermédiaire d'un moyen d'évacuation vers ladite chambre de traitement,
**caractérisé par** les étapes supplémentaires consistant à:
- introduire, de manière continue, le flux de particules solides chaudes provenant de la chambre de traitement dans la chambre de transfert de chaleur sur une surface supérieure du lit fluidisé en particules solides dans la chambre de transfert de chaleur, et
- permettre un écoulement libre de particules solides entre la au moins une zone de transfert de chaleur et la au moins une zone de transport, les zones de transfert de chaleur et de transport n'étant pas séparées les unes des autres par aucune cloison.

2. Procédé selon la revendication 1, **caractérisé par le fait que** l'on introduit un gaz de fluidisation séparément commandé dans des zones de transfert de chaleur et de transport de particules solides afin de maîtriser le flux interne de particules solides entre lesdites zones.

3. Procédé selon la revendication 1, **caractérisé par le fait que** l'on introduit, dans une chambre de transfert de chaleur, disposée dans une conduite de retour d'un réacteur à lit fluidisé circulant, des courants de gaz commandés à part dans des zones de transfert de chaleur et des zones de transport de particules soldies, afin de maîtriser le trajet de particules solides entre une ou plusieurs admissions et une ou plusieurs évacuations dans ladite chambre de transfert de chaleur.

4. Procédé selon la revendication 1, **caractérisé par le fait que** l'on introduit, dans une chambre de transfert de chaleur, disposée à l'intérieur d'une chambre de traitement, des flux de gaz séparément régulés vers des zones de transfert de chaleur et des zones de transport de particules solides, afin de commander le trajet de particules solides entre une ou plusieurs admissions et une ou plusieurs évacuations dans ladite chambre de transfert de chaleur.

5. Procédé selon la revendication 1, **caractérisé par le fait que** l'on introduit du gaz de fluidisation séparément régulé dans des zones de transfert de chaleur et de transport de particules solides afin de commander le flux interne horizontal de particules solides à travers des zones de transfert de chaleur et de transport de particules solides, lesdites zones de transfert de chaleur étant séparées les unes des autres par des zones de transport de particules solides et disposées sensiblement au même niveau horizontal que les zones de transport de particules solides.

6. Procédé selon la revendication 1, **caractérisé par le fait que** l'on introduit du gaz de fluidisation dans des zones de transfert de chaleur dans une chambre de transfert de chaleur et que l'on commande le transfert de chaleur en maîtrisant le courant de gaz de fluidisation.

7. Procédé selon la revendication 1, **caractérisé par le fait que** l'on introduit des courants de gaz transporteur dans des zones de transport de solides dans une chambre de transfert de chaleur et que l'on commande le transfert de chaleur en maîtrisant lesdits courants de gaz transporteur.

8. Procédé selon la revendication 1, **caractérisé par le fait que** l'on évacue par débordement des solides provenant de la chambre de transfert de chaleur.

9. Procédé selon la revendication 1, **caractérisé par le fait que** l'on évacue des solides à partir de la chambre de transfert de chaleur par des ouvertures disposées en dessous du niveau superficiel du lit fluidisé, lesdites ouvertures constituant avantageusement une écluse d'écoulement de solides.

10. Procédé selon la revendication 1, **caractérisé par le fait que** l'on introduit des particules solides chaudes issues de la chambre de traitement sensiblement par-dessus de toute la section droite horizontale de la chambre de transfert de chaleur.

11. Dispositif pour récupérer de la chaleur à partir des particules solides dans un réacteur à lit fluidisé, comportant une chambre de traitement (12) avec un lit fluidisé de particules solides dans celle-ci, ledit dispositif comprenant:
- une chambre de transfert de chaleur (26, 58), raccordée à la chambre de traitement (12) et y présentant un lit fluidisé (28) de particules solides,
- des surfaces de transfert de chaleur (30, 30') disposées dans la chambre de transfert de chaleur (26, 58),
- des moyens d'admission (16, 56) pour introduire un courant continu de particules solides chaudes provenant de la chambre de traitement (12) vers la chambre de transfert de chaleur (26, 58),
- des moyens d'évacuation (36, 62, 62', 62") afin de recycler, de manière continue, des particules solides issues de la chambre de transfert de chaleur (26, 58) vers la chambre de traitement (12),
- des moyens de buse (40, 40', 40", 41, 41', 41", 42, 50, 50', 50 ", 51, 66, 66', 66") afin d'introduire du gaz dans la chambre de transfert de chaleur (26, 58),
- au moins une zone de transfert de chaleur (46, 46') et au moins une zone de transport de particules solides (48) sensiblement au même niveau horizontal à l'intérieur dudit lit fluidisé (28) de particules solides dans la chambre de transfert de chaleur (26, 58),
et
- des moyens pour commander le transfert de chaleur dans la chambre de transfert de chaleur, lesdits moyens comprenant des moyens séparément commandés (52, 52', 52'') pour introduire des courants de gaz vers la zone de transfert de chaleur (46, 46') et vers la zone de transport de particules solides (48) dudit lit fluidisé de particules solides,
**caractérisé en ce que**
- les moyens d'admission (16, 56) pour introduire un courant continu de particules solides chaudes sont disposés au-dessus de la chambre de transfert de chaleur (26, 58) de sorte que les particules solides chaudes y s'écoulent sur une surface supérieure (38) du lit fluidisé (28) de particules solides,
et
- la au moins une zone de transfert de chaleur (46, 46') et la au moins une zone de transport (48) sont disposées de façon à permettre un flux libre de particules solides entre elles, les zones de transfert de chaleur et de transport (46, 46', 48) n'étant pas séparées les unes des autres par aucune cloison.

12. Dispositif selon la revendication 11, **caractérisé par** deux ou plusieurs zones de transfert de chaleur (46, 46') disposées au même niveau horizontal dans la chambre de transfert de chaleur (26, 58), lesdites zones de transfert de chaleur (46, 46') étant séparées les unes des autres par des zones de transport de particules solides (48).

13. Dispositif selon la revendication 11, **caractérisé par** les moyens d'évacuation (36, 62, 62', 62") comprenant des ouvertures afin d'évacuer des particules solides par débordement.

14. Dispositif selon la revendication 11, **caractérisé par** les moyens d'évacuation (36, 62, 62', 62") comprenant plusieurs orifices étroits horizontaux du type fente disposés au-dessous du niveau de surface (38) du lit fluidisé dans la chambre de transfert de chaleur (26, 58), lesdits orifices constituant une écluse d'écoulement en matières solides dans la chambre de transfert de chaleur (26, 58).

15. Dispositif selon la revendication 11, dans lequel la chambre de transfert de chaleur (26, 58) dans un réacteur à lit fluidisé circulant est disposée dans la partie fond (26) d'une conduite de retour (16).

16. Dispositif selon la revendication 15, dans lequel la conduite de retour (16, 56) est constituée entre deux parois en tubes sensiblement planes parallèles à une paroi de la chambre de traitement (12), la conduite de retour (16, 56) présentant un orifice d'évacuation du type fente sensiblement rectangulaire, ledit orifice d'évacuation dans la conduite de retour (16, 56) constituant un orifice d'admission dans la chambre de transfert de chaleur (26, 58).

17. Dispositif selon la revendication 11, dans lequel la chambre de transfert de chaleur (58) est disposée intérieurement à l'intérieur de la chambre de traitement (12).

18. Dispositif selon la revendication 11, dans lequel des surfaces de transfert de chaleur (30, 30', 30") sont disposées de façon égale dans des zones de transfert de chaleur (46, 46') et de transport de particules solides (48), les zones de transport de particules solides (48) étant sensiblement inférieures à des zones de transfert de chaleur (46, 46'), de façon que l'aire combinée de surface de transfert de chaleur dans les zones combinées de transfert de chaleur (46, 46') soit sensiblement plus importante que l'aire combinée de surface de transfert de chaleur dans les zones combinées de transport de particules solides (48).

19. Dispositif selon la revendication 18, dans lequel l'aire combinée de surface de transfert de chaleur dans les zones de transport de particules solides (48) est de dimension très petite par rapport à l'aire combinée de surface de transfert de chaleur dans les zones de transfert de chaleur (46, 46').

20. Dispositif selon la revendication 11, **caractérisé par** la chambre de transfert de chaleur (26, 58) comprenant des surfaces de transfert de chaleur (30, 30', 30'') étant disposées de façon égale à la fois dans des zones de transfert de chaleur (46, 46') et de transport de particules solides (48), et les zones combinées de transfert de chaleur (46, 46') étant sensiblement inférieures à des zones combinées de transport de particules solides (48), de manière que le transfert de chaleur combiné dans des zones de transport de particules solides (48) soit < 10 % du transfert de chaleur combiné dans des zones de transfert de chaleur (46, 46').
